# EUROPEAN PATENT SPECIFICATION

(11) **EP 0 320 315 B1**
(45) Date of publication and mention of the grant of the patent: **18.08.1993**
(21) Application number: 88311758.2
(22) Date of filing: 12.12.1988
(51) Int. Cl.: B62D 65/00

(54) **Vehicle assembly method and arrangement**
Verfahren zum automatischen Zusammenbau von Fahrzeugen und Einrichtung der Fertigungsstrasse
Méthode pour l'assemblage automatique de véhicules et disposition de la chaîne de production

(30) Priority: 10.12.1987 JP 313024/87
(43) Date of publication of application: 14.06.1989
(73) Proprietor: NISSAN MOTOR CO., LTD., Yokohama City (JP)
(72) Inventor: Uemura, Satoshi, Shibuya-ku Tokyo (JP); Kawada, Susumu, Kamakura City (JP); Sekine, Yoshitada, Naka-ku Yokohama City (JP); Miyauchi, Tatsuo, Utsunomiya City (JP)
(74) Representative: Godwin, Edgar James

(56) References cited:
- EP-A- 0 147 530
- EP-A- 0 232 999
- EP-A- 0 261 297
- GB-A- 2 110 427
- GB-A- 2 176 445

## Description

The present invention relates generally to a production line arrangement and more specifically to an automated method of assembling automotive vehicles or the like.

A previously proposed assembly arrangement comprised the use of support arrangements each equipped with a number of gauge members on which panels could be supported and clamped in position. By moving either the support arrangement or bringing a structure, such as a partially completed vehicle body, to the support, the panel could be held in the appropriate position with respect to the body and in a manner which facilitates spot welding of the panel to the same.

However, this arrangement has suffered from the drawback that the gauge members each required hydraulic or pneumatically operated latch-like members which could be swung into position in a manner to clamp the panel (workpiece) in position in the gauges during the welding or like operation. As the clamping members were required to be shaped so that when they were closed down on the gauge sections the resulting aperture corresponded to the cross-sectional shape of the panel or component to be supported by the same, the variety of panels and/or components which could be supported by any one support arrangement was severely limited.

Further, due the rigidity distribution of the panels, when the latch-like members were swung to their released positions, the panels tended to, in some circumstances, undergo a "spring back" phenomenon or the like, and induce the situation wherein they tended to distort and or change position in an unintened manner.

To overcome this problem it was found necessary to isolate and manually adjust the positions of the problematical gauges in a manner wherein, when the clamping action was removed, the panels would not undergo undesirable changes in configuration and/or position. However, this adjustment has proven extremely time consuming and, in combination with the fact that when the line was modified and required the provision and set of new gauge members (including the above-mentioned type of fine adjustment), was such as to badly impair the utility of the arrangement.

To overcome this problem an arrangement of the nature disclosed in JP-A-59-144595 and United States Patent 4 691 905, issued on September 8, 1987 in the name of Tamura et al, was proposed. This arrangement features the use of workpiece locating devices which include gauge members which can be selectively shaped in accordance with the profile and shape of the workpiece to be supported. Using these arrangements in combination with articulated robotic support arrangements which permit the gauges to be moved in three dimensions, a number of panels and components can be selectively moved into predetermined positional relationships with one and other wherein they can be spot welded together.

However, this type of arrangement has met with only partial success in that a long time is required to set up the system and once in operation requires constant surveilance in order to reset the various elements in the case of a drift in setting which permits the assembly accuracy to fall outside the permitted tolerances. Viz., in the case the robots are provided with a control program it is normal that an operator will "teach" each robot what to do during the initial set up stages. This teaching involves manually controlling the machanism in a manner wherein the operator actually performs the assembly operation. Once the appropriate movements are recorded the robot is able to mimic the manually induced set of operations and thus reproduce the human ability. Accordingly, when a change in production is required an operator must re-teach the robots in accordance with the new or modified tasks which are now required. By way of example only, when the production of a sedan model changes to the corresponding stationwagon, while the forward end of the vehicle will remain essentially the same, the rear portion will have different panels and require that the robots be taught how to manipulate the same into place and secure the same by welding.

It is an object of the present invention to provide a system which is substantially totally automated and which can quickly set the assembly arrangement and adjust the same to produce the required precision within a short time and which constantly monitors the assembly to ensure the required tolerances are met.

Known systems in which a series of robots is used but which are incapable of automatically setting/re-setting all the robots together at the same time are disclosed in EP-A-0 261 297, EP-A-0 232 999 and EP-A-0 147 530.

The present invention is defined by the appended claims.

### BRIEF DESCRIPTION OF THE DRAWINGS

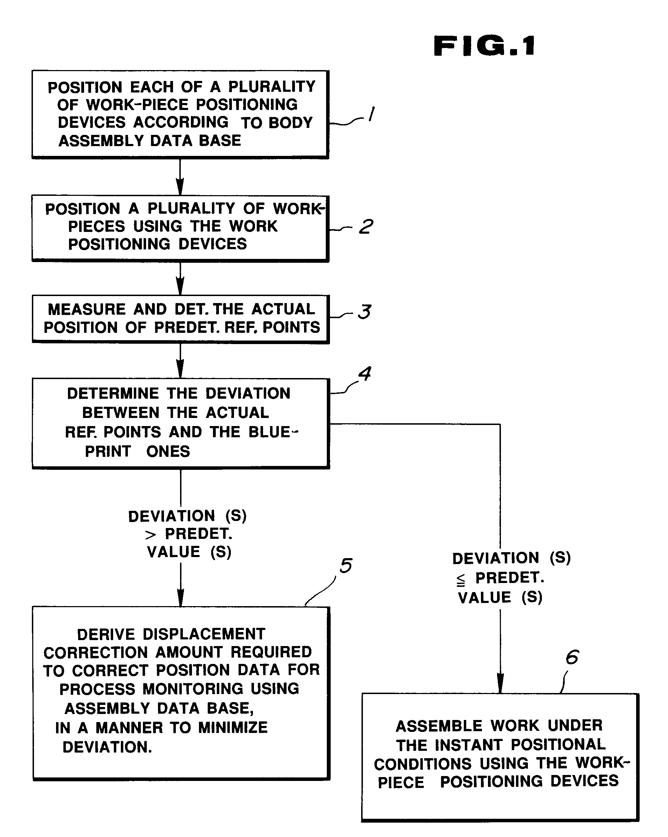

Fig. 1 is a block diagram shown the basic steps which are used in connection with the instant invention;
Fig. 2 is a perspective view of an assembly stage wherein a vehicle body is assembled and measured;
Fig. 3 is a schematic drawings depicting the hardware arrangement which is used in connection with the instant embodiment of the present invention; and
Fig. 4 is a flow chart showing the control steps which characterize the operation of the embodiment of the instant invention.

### DESCRIPTION OF THE PREFERRED EMBODIMENTS

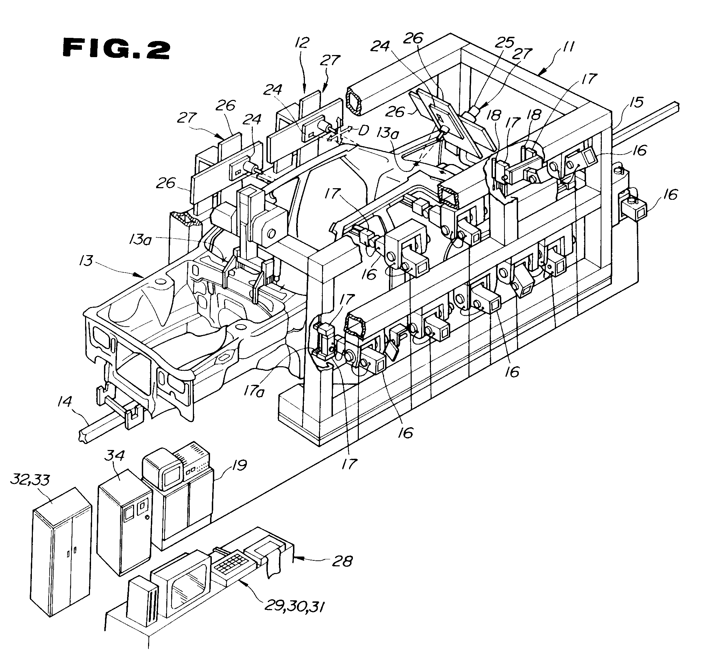

Fig. 2 is a perspective view showing a stage of a production line which stage embodies the present invention. In this embodiment the stage basically comprises rectangular framework in which a work positioning system 11 and a body measuring system 12 are installed. At this stage of the line the assembly of the main body section 13 (merely by way of example) is carried out. In this instance the left and right side panels, the rear panel, cowl top assembly, and shelf panel are introduced into the stage and the workpiece position system 11 move the above-mentioned panels into their respective positions relative to the main body component. The body measuring system 12 is then employed to determine if the panels are correctly placed and induce feedback control of the workpiece positioning system until sufficiently accurate placement is achieved.

Following spot welding or the like which secures the panels in place, the vehicle body is moved along shuttle conveyor 14 to the next stage wherein roof rail and roof panel components (by way of example only) are additionally disposed on the vehicle body and appropriately welded in place when determined to be located with sufficient accuracy. The assembly is then measured in order to re-check the production precision.

At the above-mentioned assembly stage, in order to locate the above-mentioned side, rear, and cowl top panels in their respective positions, frame 15 is arranged to support a plurality of robots 16 (forming part of the workpiece positioning system) each of which has a hand portion and work supporting jig 17. Selected robots 16 are further provided with pneumatic cylinder operated work clamp 18.

The work supporting jigs or units 17 include gauge devices 17a which each comprise a large number of thin plates which can be individually moved (via vibration or the like mechanical stimulus) in a manner to define a predetermined contour or shape, and subsequently squeezed together in a manner wherein they are locked in position. In this embodiment the gauge devices 17a are individually set in predetermined shapes depending on the shape of the particular structural element to be supported by the same and the particular operation which is to be carried out. For further details concerning the contruction, arrangement, and setting of the gauge devices 17a, reference may be had to United States Patent No. 4 691 905 issued on Sept. 8, 1987 in the name of Tamura et al. The content of this document is hereby incorporated by reference thereto.

Following the shaping of the gauge devices 17a, the leading ends of the jigs are moved into the appropriate positions in a manner wherein the preshaped gauge devices 17a engage the respective workpieces which are to be secured to the main body member or section. As each of the gauge devices 17a has been pre-shaped to mate with the portion of the workpiece which it engages, said workpiece can be securely supported and moved into juxtaposition with the site to which it is to be connected. Upon being appropriately located with respect to the main vehicle body component or member 13, clamping devices 18 which are provided on predetermined robots 16, secure the panels to the main vehicle body section in a manner which establishes a quasi integral arrangement.

Welding robots (not shown) which are provided at this stage are then induced to produce spot welding and permanently secure the panels in place.

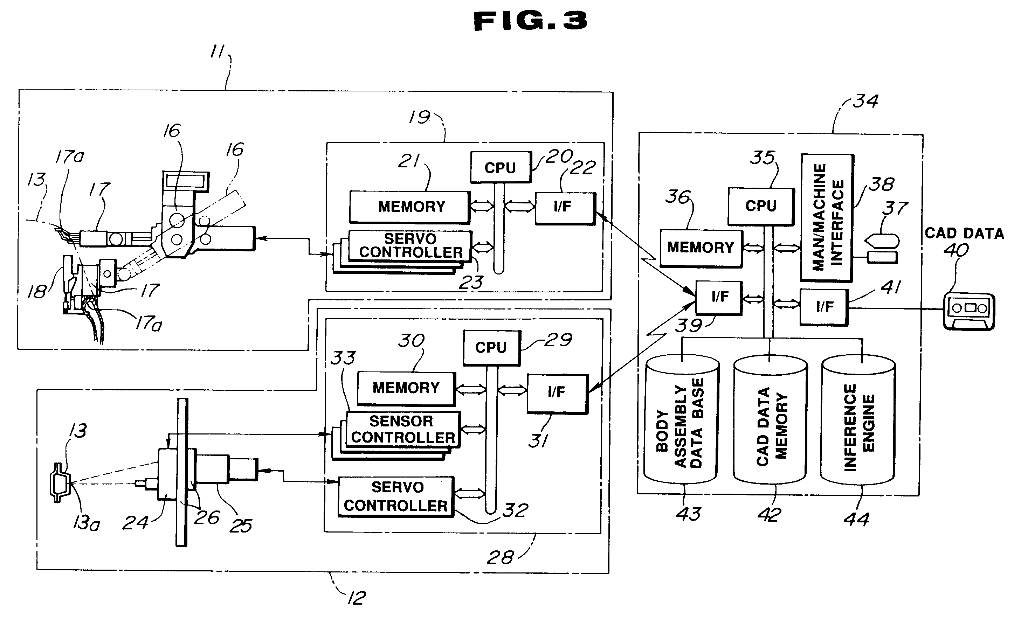

In order to control the operations of the above, the hardware arrangement schematically shown in Fig. 3 is used. As will be apparent, this arrangement includes a robot control unit 19 which comprises a CPU 20, a memory 21, an I/O interface 22, and a plurality of servo controller units 23. The memory 21 contains data pertaining to the disposition of the work jigs 17 and the setting of the gauge devices 17a. The CPU 20 is arranged to process the data and to establish a feedback control wherein control and positional data are transferred back and forth between the various elements via a bus arrangement (no numeral). In accordance with the data inputted via the interface 22, the relevant data are read from the memory 21 and the appropriate control implemented.

The body measuring system 12 includes a plurality of dimension measuring devices (only three are shown). These devices are each arranged to be movable in the directions indicated by the bold arrows D in Fig. 2. Each of the devices includes a scanner 24 which produces a laser beam and a servo motor 25 which is arranged to move the scanner vertically and horizontally along a guide arrangement 26. During operation, the scanners 24 are induced to produce laser beams which are projected against selected portions 13a of the vehicle body and the position of the reflected beams detected in a manner which enables data which is indicative of the dimensions and distances of the scanned portions to be determined.

For more disclosure relating to the construction and operation of such devices reference may be had to copending United States Patent Applications Serial No. 215, 708 filed on July 6, 1988 in the name of Kawamura et al and No. 215, 098 filed on July 5, 1988 in the name of Endo et al.

The first of these documents disclose a dimension measuring system wherein in order to accurately scan an object for the purposes of determining the dimensions, surface finish or the like, the position of the object according to the measuring system coordinate grid is determined. Using this orientation, the degree of misalingment with respect to a standard position of the grid is determined and the scanning devices which perform the actual measurement are moved to positions which take the amount of misalingment into consideration and wherein accurate examination is assured.

The second relates to a dimension measuring system wherein, in order to accurately measure the panel or structure under observation, when a preselected parameter magnitude of a signal produced in response to a received reflected laser beam is excessively high, the power of the laser is reduced until such time as a satisfactory level is reached. On the other hand when the signal is low and laser power cannot be increased further, amplification is induced until such time as the required level is produced.

The operation of the dimension measuring devices is controlled by a control circuit arrangement or unit 28. This arrangement includes a CPU 29, a memory 30, and a plurality of servo controllers 32 and 33. In this instance the servo controllers 32 are connected to the motor and positional control arrangement of the scanners while the controllers 33 are operatively connected with the scanning mechanisms per se. An interface 33 is arranged to receive instruction data concerning when and where to scan and to output the resulting dimension indicative data which is obtained.

A central control arrangement 34 includes what is referred to as an expert system. This arrangement, as shown in Fig. 3, comprises a CPU 35, a memory 36, a man/machine interface 38 (in this case including a keyboard and display arrangement 37), an interface 39 which is arranged to transmit data to and and receive data from, the interface arrangement 22 of the robot control unit 19 and the interface 31 of control unit 28 which controls the operation of the scanning devices.

The central control unit 34 (as it will be referred to hereinafter) further includes a second interface arrangement 41 which is arranged to receive data input from a source such as cassette drive containing a streamer tape or the like. In this arrangement the cassette is arranged to contain CAD data which is recorded on a suitable memory device 42 which exhibits a large capacity and high speed access characteristics such as a magnetic drum, hard disc, or series of hard discs. In addition to the CAD memory, the central control unit further includes a body assembly data base memory device 43 and what shall be referred to a "logic engine" memory device 44. The last - mentioned memory is arranged to contain programs which can extrapolate and infer various results from the data available. In other words a kind of artificial intelligence (AI) system.

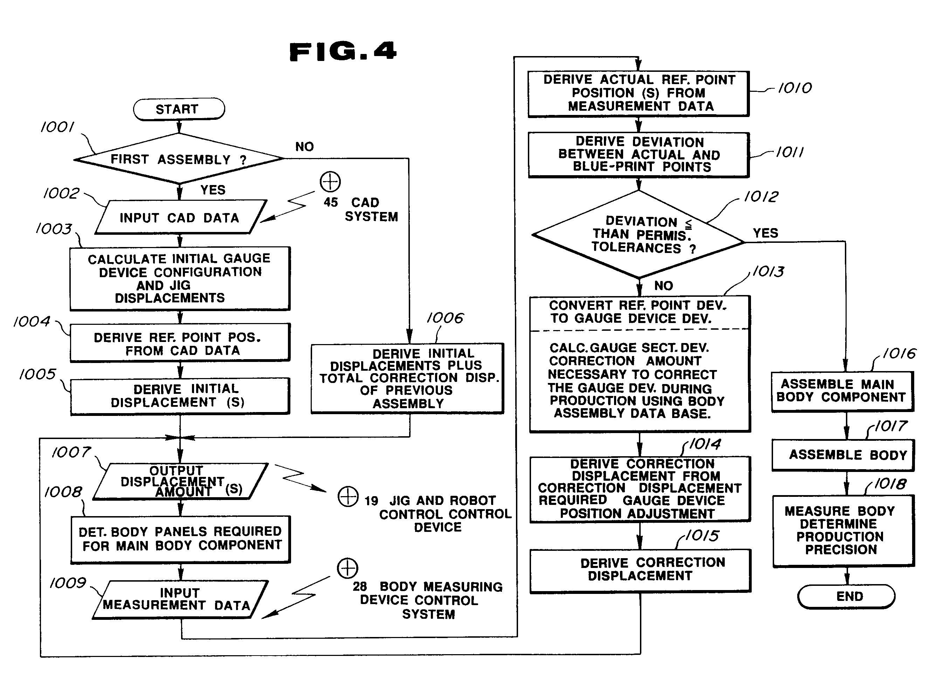

Fig. 4 shows, in flow chart form, the steps which characterize the operation of the above-described system. The first step 1001 of this chart is arranged to enquire if the instant run of the illustrated program is the first or not. In the event that it is the initial one, then at step 1002 the CAD data is loaded into the central control unit 34 from the cassette drive or similar data source 40. When the data has been loaded and transferred to the CAD memory device 42, the program then flows to steps 1003 wherein, depending on the panels to be attached, the positions of the workpiece support units are determined in accordance with the respective gauge devices and input to the central control unit 34. Based on the CAD data, the control unit 34 then develops data which satifies the required positional relationship between the workpiece support units, and calculates the position and displacements for each of the work support jig and gauge devices.

In addition to this, in order to induce the work support jigs 17 to assume the required positions, the amount of initial displacement of the units from their home positions is derived. Together with this, in order to achieve the shape to which each of the gauge devices must be set so as to correspond to the shape of the work piece to be supported thereby, the displacement by which each of the plates of the gauge devices must be displaced from their respective home positions is derived.

Following this, at step 1004 depending on the panel to be supported, the location of the reference points on the same which are used as scanning targets and which are used to determine the assembly accuracy are derived using the CAD data and input to the main control unit 34. The main control unit 34 then derives the "blue-print" positions in which these reference points should be located when the panels, which are to be disposed on the main vehicle body component at the instant assembly stage, are arranged with the required degree of precision. Viz., the panels are disposed in the positions according to the CAD-data-defined "blue-print" of the vehicle body. Upon completion of this, the program flows to the next step.

At step 1005 commands which induce the above-mentioned intial displacement of the plates of the gauge devices 17a and of the respective work support jigs 17 are generated. At step 1007 these command signals are transmitted to the jig and robot control units 19 via the interfaces 22 and 39.

On the other hand, in the event that the outcome of the enquiry conducted at step 1001 indicates that the instant run is not the first, then the program by-passes step 1002 - 1005 and flows directly to step 1006. At this step, the program is such as to update the displacement values which were used in the immediately previous run and add correction values to the existing ones in a manner which adjusts for any deviations beyond an acceptable limit or the like by modifying the various displacement values and therefore modifing the positions in which the various panels are disposed prior to spot welding. As will become more apparent hereinlater, there may be some difficult in actually getting one or more of the panels to fit into exactly the required position. In this instance the robots 16 are suitably induced to try a different technique of moving the panel into position in a manner similar to a human operator if present.

This modifying process of course quickly eliminates any inaccuracies and ensures that the desired assembly precision is quickly established and maintained as will also become apparent as the disclosure proceeds. The manner in which these correction values are derived will be discussed hereinafter.

Step 1008 is such as to induce the various work piece support jigs 17 to move and set the various panels in place on the main vehicle body component. Following this, at step 1009, the body measuring system 12 is used to scan the various pretermined points on the respective panels and input the data to the central control unit 34. At step 1010, the positions of the reference points are determined and at step 1011 the difference or deviation between each of the actual and corresponding blue-print points is derived and subsequently compared in step 1012 with a predetermined limits or tolerance values. In the event that each of the points is found to be within permissible limits of the blue-print values, the program flows to step 1016. However, if one of the points is not yet within an acceptable range of the desired position, then the program flows to step 1013.

In this last - mentioned step, the amount of deviation of the panel from the preferred location is converted into displacement correction values for the gauge devices 17a associated with the same.

In order to conduct the above - mentioned conversion, the data contained in the body assembly data base and what shall be referred to as an "inference engine" is utilized in a manner wherein the position of each of the thin plates used in the gauge sections, required to move the panel toward the desired position and to reduce or eliminate the sensed deviation, is derived and the change in displacement from the instant values determined. The so-called "inference engine" in this instance contains what can be referred to as artificial intelligence type programs which can predict and extrapolate in a manner which allows for the appropriate displacement corrections to be ascertained in close to real time.

This is necessary in view of the number of different panels which are involved and the large number of difference shapes, mutual relationships, displacements, and orientations which are required to accurately assemble the same. In other words, in order to permit the maximum possible number of construction operations to be carried out on the main body component, the data base and the inference engine are teamed together in a manner to emulate the skilled worker in a manner to minimize or eliminate the deviations between the assembled body and the blue-print version. To this end, the amount of displacement is derived, taking the structural rigidity of the adjacent panel or panels in question into account, using a finite element & liner programming method. Using this technique the amount of displacement can be converted into suitable gauge section displacement correction values.

More specifically, at step 1013, using the inputted CAD data to derive a model of the main body section as thus far assembled in terms of rigidity distribution etc., of the same, the difference between the actual and the desired constructions are ascertained, the gauge section displacement correction values are read, and using a conversion equation which allows for the rigidity, the positions in which the work support jigs should be disposed are converted with respect to the deviation amount in real time. Following this, the inference engine deduces or infers the cause of the difference and used the above-mentioned difference and gauge section displacement correction amount to obviate the error which has induced the deviation. This correction management process is such that the required gauge section position related difference and correction amounts are derived, and based on the relationship of these two values.

At step 1014, the gauge section position correction amount data obtained in the previous step (viz., step 1013) is used to correct the amount of displacement of the work support jig or jigs induced at step 1007, at step 1015 suitable correction displacement commands are generated, and following this, the program loops back to step 1007.

As will be undertood steps 1008 to 1015 are such as to derive the position of the reference points on the various panels and determine the relative displacement or deviation between these and the "blue print" ones derived using the CAD data. Following this the deviation is reduced or eliminated by feedback control which modifies the gauge section displacements by deriving a displacement correction. The process is repeated until such time as required assembly tolerances are met whereafter the program proceeds to step 1016 wherein spot welding is carried out and the various panels which have been disposed in position are permanently secured therein. Following this (step 1017) the thus far assembled vehicle body is moved along the shuttle conveyor 14 to the next stage whereat, as previously mentioned, further panel disposition and spot welding operations are carried out.

At step 1018 the work performed in the previous stages is checked by measuring and/or inspecting the vehicle body using laser beam scanning equipment of the nature disclosed in the above mentioned copending United States Patent Applications (viz., copending United States Patent Applications Serial No. 215, 708 (Serial no. 4, 989 981) filed on July 6, 1988 in the name of Kawamura et al and No. 215, 098 (Serial No. 4 880 307) filed on July 5, 1988 in the name of Endo et al.

This double checks the assembly accuracy.

As will be appreciated, using the above-describe method in order to ensure that the various panels are placed on the main body section with the required degree of accuracy, the various settings and displacement which effect the location of the panels are corrected by feedback control to the point that the required tolerances can be met. The time required for the correction and adjustment is minimized, as the cycle via which the correction is implement is such that a large number of jigs and gauges can be adjusted much faster than with the prior art arrangements and thus facilitates quick production set up and initiation.

It should be noted that in this instance the inference engine is arranged so that, in the event that the above method of reducing the difference between the actual and desired location of the reference points does not prove effective, the system is able to select another (preferably the next most appropriate) method from among a number of possible different ones which have been programmed in case this very problem should occur.

It also should be appreciated that the present invention is not limited to the assembly of the above-mentioned number of panels to the chassis or main body section and that it is within the scope of the present invention to dispose/assemble a relatively large number of different panels and/or components at the same stage - even to the point of completing the construction of the vehicle - rather than using a series of different stages, if so desired.

## Claims

1. An assembly arrangement comprising:
a plurality of assembly and/or inspection stages; means for moving a vehicle body from one stage to another;
work positioning means for supporting and moving a plurality of work pieces and/or panels into predetermined positions on a vehicle body;
scanning means associated for scanning predetermined locations on a vehicle body and for determining the positional relationship between the work pieces and/or panels with respect to the vehicle body and for supplying feedback information via which the positioning of work pieces and/or panels with respect to the vehicle body can be adjusted; and
means for securing the work pieces and/or panels to the vehicle body; CHARACTERIZED BY:
a central control unit (34) which controls the plurality of stages and which includes memory means (42,43,44) in which pre-recorded CAD and assembly data are stored and/or can be introduced from an external source (40) and which controls the operation of the scanning means (12) and the work support and securing means (11).

2. An assembly arrangement as claimed in claim 1 CHARACTERIZED IN THAT said scanning means comprises a body measuring system (12) for each of the plurality of stages, each of the body measuring systems (12) including scanners (24) which are mounted so as to be both vertically and horizontally movable with respect to a vehicle body.

3. An assembly arrangement as claimed in any of the preceding claims CHARACTERIZED IN THAT the central control unit (34) includes artificial intelligence (AI) which, in the event that a body measuring system indicates that a given work piece or panel has not assumed the required position in a given stage, generates commands via which a work positioning system (11) of that stage is operated to maneuver the work piece or panel in question toward the required position in a manner which is different from the initial one and which emulates the manner in which a skilled operator would attempt to achieve the required positioning.

4. An assembly arrangement as claimed in claim 1 CHARACTERIZED IN THAT the work positioning means includes a plurality gauge devices (17a) which each include a number of plates which are arranged side by side and which can be moved with respect to one another under the control of the central control unit (34) in a manner to assume various configurations and thus enable a large number of different work pieces to be supported thereon.

5. An assembly arrangement as claimed in any of the preceding claims CHARACTERIZED IN THAT the body measuring means (12) scans targets following the connection of a work piece or panel to the vehicle body and produces data from which the accuracy of the assembly can be determined and feeds back the data to the previous stages.

6. An assembly arrangement as claimed in any of the preceding claims CHARACTERIZED IN THAT each of the scanning means (12) generates a laser beam and IN THAT the intensity of the beam is reduced or increased according to the received reflected beam intensity and when a further increase in the intensity is not possible the signal which is derived is amplified.

## Patentansprüche

1. Eine Montagevorrichtung mit:
einer Vielzahl von Montage- und/oder Prüfbühnen;
Einrichtungen zum Bewegen einer Karosserie von einer Arbeitsbühne zur anderen;
Werkstück-Positioniervorrichtungen zum Halten und Bewegen einer Vielzahl von Werkstücken und/oder Karosserieblechen in vorher festgelegten Positionen auf einer Karosserie;
dazugehörigen Abtastvorrichtungen zum Abtasten zuvor festgelegter Stellen auf einer Karosserie und zum Bestimmen der Lagebeziehungen der Werkstücke und/oder Karosseriebleche zur Karosserie und zum Bereitstellen einer Prozeßinformation, über die die Position der Werkstücke und/oder Karosseriebleche zur Karosserie eingestellt werden kann; und
Einrichtungen zum Befestigen der Werkstücke und/oder Karosseriebleche an der Karosserie; GEKENNZEICHNET DURCH:
eine zentrale Steuerung (34), die die Vielzahl der Arbeitsbühnen steuert und die Speicher (42, 43, 44) umfaßt, auf denen voraufgezeichnete CAD- und Montagedaten gespeichert sind und/oder von einer externen Quelle (40) eingegeben werden können, und die Funktionsweise der Abtastvorrichtungen (12) und der Werkstück-Halte- und -befestigungsvorrichtungen (11) steuert.

2. Montagevorrichtung nach Anspruch 1, DADURCH GEKENNZEICHNET, DAß die Abtastmittel ein Karosserie-Meßsystem (12) für jede der Arbeitsbühnen umfassen, wobei jedes Karosserie-Meßsystem (12) Abtaster (24) aufweist, die zur Karosserie sowohl in vertikale als auch in horizontale Richtung beweglich montiert sind.

3. Montagevorrichtung nach einem der vorangegangenen Ansprüche, DADURCH GEKENNZEICHNET, DAß die zentrale Steuerung (34) eine künstliche Intelligenz aufweist, die, falls ein Karosserie-Meßsystem anzeigt, daß ein bestimmtes Werkstück oder Karosserieblech nicht die geforderte Position in der Arbeitsbühne eingenommen hat, Befehle erzeugt, über die ein Werkstück-Positioniersystem (11) der Arbeitsbühne so betätigt wird, daß das betreffende Werkstück oder Karosserieblech auf andere Weise in die geforderte Position bewegt wird als zu Beginn, und das die Art und Weise nachahmt, in der ein erfahrener Bediener versuchen würde, die geforderte Positionierung zu erreichen.

4. Montagevorrichtung nach Anspruch 1, DADURCH GEKENNZEICHNET, DAß die Werkstück-Positioniereinrichtung eine Vielzahl von Lehren (17a) umfaßt, wobei jede eine Reihe von Platten aufweist, die nebeneinander angeordnet sind und durch die zentrale Steuerung (34) so zueinander bewegt werden können, daß sie verschiedene Anordnungen einnehmen und somit viele verschiedene Werkstücke halten können.

5. Montagevorrichtung nach einem der vorangegangenen Ansprüche, DADURCH GEKENNZEICHNET, DAß die Karosserie-Meßeinrichtung (12) die Ziele nach der Verbindung eines Werkstücks oder Karosserieblechs mit der Karosserie abtastet und Daten erzeugt, aus denen die Montagegenauigkeit ermittelt werden kann, und die Daten an die vorangegangenen Arbeitsbühnen zurückführt.

6. Montagevorrichtung nach einem der vorangegangenen Ansprüche, DADURCH GEKENNZEICHNET, DAß jede Abtasteinrichtung (12) einen Laserstrahl erzeugt UND DADURCH, DAß die Intensität des Strahls je nach der Intensität des empfangenen reflektierten Strahls verringert oder erhöht wird und, wenn eine weitere Erhöhung der Intensität nicht mehr möglich ist, das abgeleitete Signal verstärkt wird.

## Revendications

1. Disposition de chaîne de production ou d'assemblage, comprenant :
une pluralité d'étages d'assemblage et/ou d'inspection;
des moyens pour déplacer une caisse de véhicule depuis un étage vers un autre;
des moyens de positionnement de travail aptes à supporter et déplacer une pluralité de pièces de travail et/ou de panneaux dans des positions prédéterminées sur la caisse du véhicule;
des moyens d'analyse par balayage ou lecteurs optiques associés, aptes à effectuer une lecture optique d'emplacements prédéterminés sur une caisse de véhicule et à déterminer la relation de positionnement entre les pièces de travail et/ou panneau par rapport à la caisse du véhicule, et permettant de fournir une information en retour, via laquelle le positionnement des pièces de travail et/ou panneaux peut être ajusté par rapport à la caisse du véhicule; et
des moyens de fixation de pièces de travail et/ou panneaux sur la caisse du véhicule;
caractérisée par une unité de contrôle centrale (34) qui contrôle la pluralité d'étages et qui inclut des moyens formant mémoire (42,43,44) dans lesquels des données préenregistrées d'assemblage et de dessins assistés par ordinateur (CAD) sont emmagasinées et/ou peuvent être introduites depuis une source externe (40), et qui contrôle le fonctionnement des moyens de lecture optique (12) ainsi que des moyens de fixation et de support de travail (11).

2. Disposition de chaîne d'assemblage selon la revendication 1, caractérisée en ce que les moyens de lecture comprennent un système de mesure de la caisse (12) pour chacun des étages de ladite pluralité d'étages, chacun des systèmes de mesure de la caisse (12) comprenant des lecteurs optiques (24) qui sont montées de manière à être à la fois verticalement et horizontalement déplaçables par rapport à une caisse de véhicule.

3. Disposition de chaîne d'assemblage selon l'une quelconque des revendications précédentes, caractérisée en ce que l'unité centrale de contrôle (34) comprend une intelligence artificielle (AI) qui, dans l'éventualité où un système de mesure de la caisse indique qu'une pièce de travail ou panneau donné n'a pas pris la position requise dans un étage donné, génère une commande via laquelle le système de positionnement de travail (11) de cet étage est actionné pour manoeuvre la pièce ou panneau de travail en question à l'encontre de la position requise, d'une façon différente de la façon initiale et qui émule la façon suivant laquelle un opérateur expérimenté aurait essayé d'atteindre le positionnement requis.

4. Disposition de chaîne d'asemblage selon la revendication 1, caractérisée en ce que les moyens de positionnement de travail comprennent une pluralité de dispositifs formant jauge (17a), dont chacun comprend un certain nombre de plaques qui sont disposées côte à côte et qui peuvent être déplacées l'une par rapport à l'autre sous le contrôle de l'unité de contrôle centrale (34) de manière à prendre différentes configurations et à ainsi permettre à un nombre important de pièces de travail différentes d'être supportées sur ceux-ci.

5. Disposition de chaîne d'assemblage selon l'une quelconque des revendications précédentes, caractérisée en ce que les moyens de mesure de la caisse (12) effectuent une lecture optique de cibles à la suite de la connexion d'une pièce ou panneau de travail sur la caisse du véhicule, et produisent des données à partir desquelles la précision de l'assemblage peut être déterminée et fournissent en retour la donnée aux précédents étages.

6. Disposition de chaîne d'assemblage selon l'une quelconque des revendications précédentes, caractérisée en ce que lesdits moyens de lecture optique (12) génèrent un faisceau laser et en ce que l'intensité de ce faisceau est réduite ou augmentée en accord avec l'intensité d'un faisceau réfléchi et reçu, et lorsqu'une augmentation supplémentaire de l'intentisté n'est pas possible, le signal qui est dérivé est amplifié.
